# EUROPEAN PATENT SPECIFICATION

(11) **EP 0 289 095 B1**
(45) Date of publication and mention of the grant of the patent: **21.09.1994**
(21) Application number: 88200814.7
(22) Date of filing: 27.04.1988
(51) Int. Cl.: A01C 17/00

(54) **A machine for spreading material**
Streuer
Epandeur centrifuge

(30) Priority: 29.04.1987 NL 8701009
(43) Date of publication of application: 02.11.1988
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 197 288
- BE-A- 552 762
- DE-A- 2 132 141
- DE-A- 2 843 487
- FR-A- 596 921
- FR-A- 2 571 209
- GB-A- 698 656
- GB-A- 2 058 533
- NL-A- 7 315 485
- US-A- 2 162 689
- US-A- 2 619 355

## Description

The invention relates to a machine for spreading material, in particular granular and/or pulverulent fertilizers such as artificial fertilizer, which machine comprises a frame, a hopper and at least one drivable spreading member, by means of which the material can be spread over the soil, which machine is provided with a distribution device comprising at least two discharge members via which material can be fed to the spreading member, the feed capacity of the one discharge member relative to the feed capacity of the other discharge member being adjustable.

A machine of this kind is known from DE-A-2132041. In this known device two discharge members in the form of outlet ports are present. One of the outlet ports can be closed to a greater extent, whereby the other outlet port will be opened to a greater extent. Reversably, the one outlet port can be opened to a greater extent, whereby the other outlet port will be closed to a greater extent.

It is an object of the invention to so improve a machine of this type that the spread of material can be controlled to an improved extent. According to the invention, this can be achieved in that a number of measuring members are provided and distributed around at least a part of the periphery of the spreading member or at least one measuring member being provided so as to be movable around a part of the periphery of the spreading member to effect a measurement in at least a number of different points distributed over the said part, said measuring member(s) each providing an indication about the quantity of material spread per unit of time against the same, said measuring members, respectively said movable measuring member being coupled with a control mechanism processing the data of the measuring members, respectively the movable measuring member and providing data of the distribution of the material over the said part around the periphery of the spreading member, the feed capacity of said discharge members being adjustable in response to the processed data of the control mechanism.

Because of the number of measuring members, or the movable measuring member, the distribution of the material over the spread sector and therewith over the width of the strip over which it is to be spread can be measured and controlled effectively in a good manner. The spread of the material can be adapted such to e.g. different types of material that a most advantageous distribution over the spreading width is obtained, so that the material is spread as uniformly as possible per unit of surface area. In particular with agricultural machines for spreading granular and/or pulverulent fertilizers, such a uniform spread is important to ensure an appropriate sprouting of the plants. It can also be important for e.g. the spreading of material for plant protection and/or pest control. Owing to the indication of the measuring members, respectively the movable measuring member, the adjustment of the discharge members and therethrough the distribution of the material over the target area of the spreading member can be controlled and adjusted advantageously.

GB-A-2058533 shows a machine for spreading material, which machine has a measuring device with a detector providing an indication of the width over which the material is spread during operation of the spreader. Further, the detector can provide an indication of the rate of distribution in relation to the width over which the material is spread.

According to the invention, the feature of an adjustable distribution of the material over the width of the strip during travel of the machine can be achieved in a simple manner by providing the discharge members to co-operate with a conveyor member, by means of which material is fed to the distribution device, the discharge members are of different constructions relative to each other and/or are arranged differently relative to the conveyor member and the discharge members can feed the material from the conveyor member to the spreading member.

An advantageous embodiment is obtained when the discharge members are disposed movably in the machine. The distribution of the material over the strip to be spread can be influenced easily when the rate at which the discharge members are movable during operation can be adjusted.

In a further embodiment of the machine according to the invention, the material can be fed advantageously to the distribution device when the conveyor member is a trough-shaped one which is movable about a rotary axis. In this situation, the distribution device can simply be of such a structure that all the material supplied to the conveyor member is fed by the distribution device from the conveyor member to the spreading member at the moment the conveyor member passes the distribution device.

The conveyor member can be provided advantageously with the material to be spread when between a hopper and the trough-shaped conveyor member there is arranged a guide, whose bottom side is contiguous to the upper side of the trough-shaped conveyor member and whose upper side is contiguous to a discharge outlet of the hopper. In accordance with the invention, the quantity of material fed by the conveyor member to the distribution device can be controlled advantageously when near the bottom side of the guide there is provided a valve-shaped mechanism, by means of which the trough-shaped conveyor member optionally can be closed to a greater or lesser extent, as seen in a cross-sectional view of the trough-shaped conveyor member.

The distribution of the material in the position where the material is fed to the spreading member can be influenced advantageously when the discharge members are contiguous to a supply channel extending between the discharge members and the spreading member.

In accordance with the invention, the direction of spread in which the material is spread by the spreading member can be influenced advantageously when the distribution device is adjustable with respect to the position where the spreading member is located in the machine.

The quantity of material to be fed to the spreading member can be controlled advantageously when at least one distance measuring member is provided above the conveyor member for determining the thickness of the layer of material on the conveyor member. Preferably, the distance measuring member is arranged near the guide, through which the material is fed to the conveyor member.

A simple embodiment of the machine is obtained when, in accordance with the invention, the distance measuring is coupled to a control mechanism comprising an electronic drive mechanism, by means of which the speed of rotation of the conveyor member and/or the rate of travel of the discharge members and/or of the distribution device can be adjusted. The data supplied by the distance measuring members and/or the measuring members, respectively the movable measuring member provided around the spreading member periphery can be transferred in a simple manner to a control mechanism or a display mechanism for the driver when the measuring members are, respectively the movable measuring member is coupled to the control mechanism by means of an optical fibre cable. A further advantageous spread of the material by the spreading member is obtained when, in accordance with the invention, the machine includes drive members by means of which the speed of rotation of the spreading member can be controlled.

For a better understanding of the invention and to show how the same may be carried into effect, reference will now be made, by way of example, to the accompanying drawings of two embodiments of the machine according to the invention, in which drawings:
Figure 1 is a side view of a tractor-coupled machine according to the invention;
Figure 2 is, to an enlarged scale, a side view of the machine shown in Figure 1;
Figure 3 is a plan view of the machine of Figure 2, taken in the direction of the arrow III in Figure 2;
Figure 4 is a rear view of the machine, taken in the direction of the arrow IV in Figure 3;
Figure 5 is, to an enlarged scale, a plan view of part of the machine, taken on the line V - V in Figure 4, the hopper having been omitted;
Figure 6 is a side view of part of the machine, taken on the line VI - VI in Figure 4;
Figure 7 is a sectional view taken on the line VII - VII in Figure 5;
Figure 8 is, to an enlarged scale, a cross-sectional view taken on the line VIII - VIII in Figure 6;
Figure 9 is a cross-sectional view taken on the line IX - IX in Figure 8;
Figure 10 is a rear view, corresponding to Figure 4, of a second embodiment of a machine according to the invention;
Figure 11 is, to an enlarged scale, a plan view of a part of the machine shown in Figure 10, taken on the line XI - XI in Figure 10;
Figure 12 is a vertical sectional view taken on the line XII - XII in Figure 11;
Figure 13 is a view of part of the machine, taken in the direction of the arrow XIII in Figure 11;
Figure 14 is a side view, corresponding to Figure 2, of a further embodiment of the machine according to the invention;
Figure 15 is a plan view of part of the machine according to Figure 14, and
Figure 16 shows a spread pattern of the spreading of the material using a machine according to Figures 14 and 15.

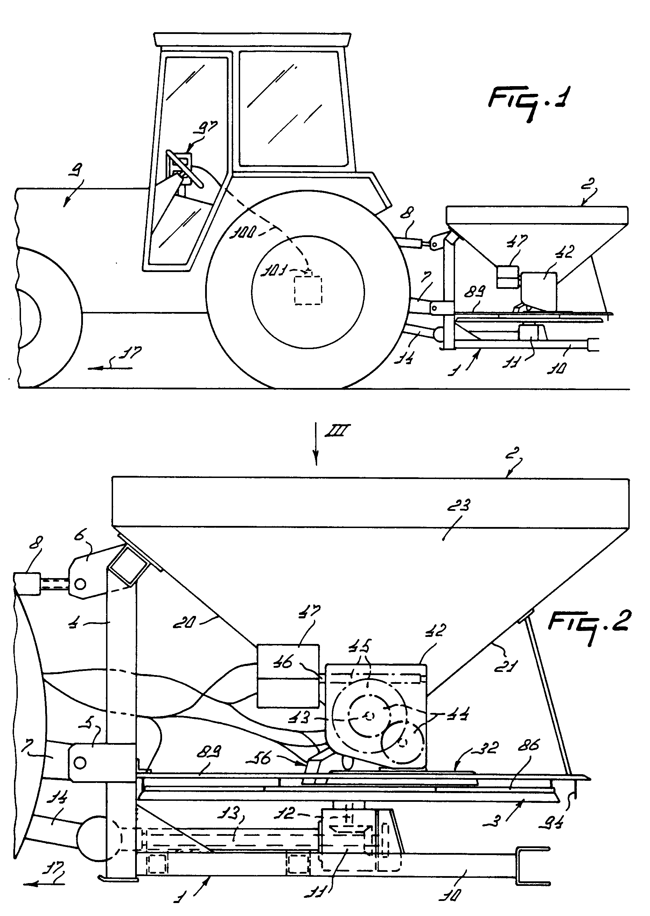

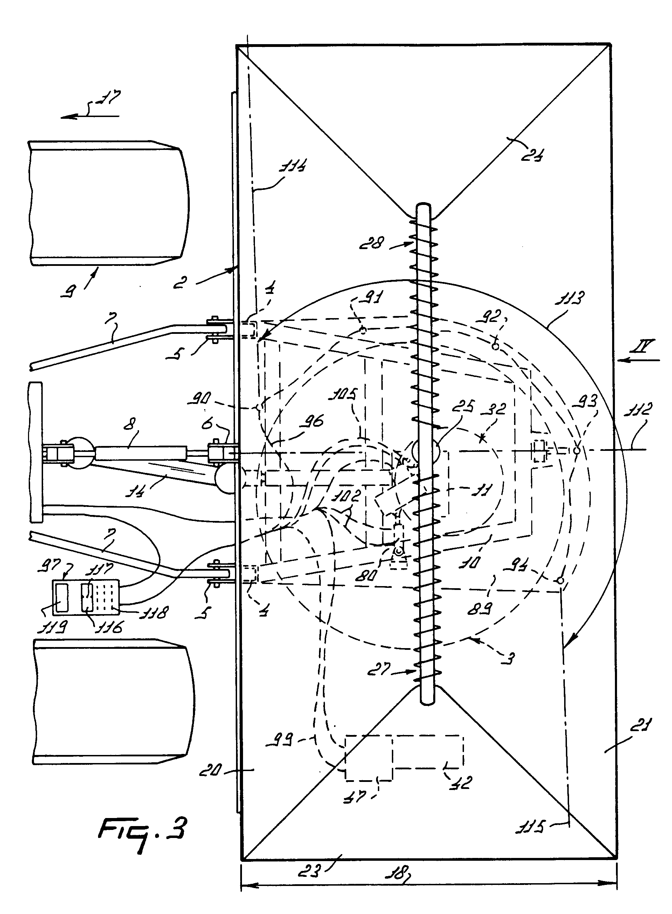

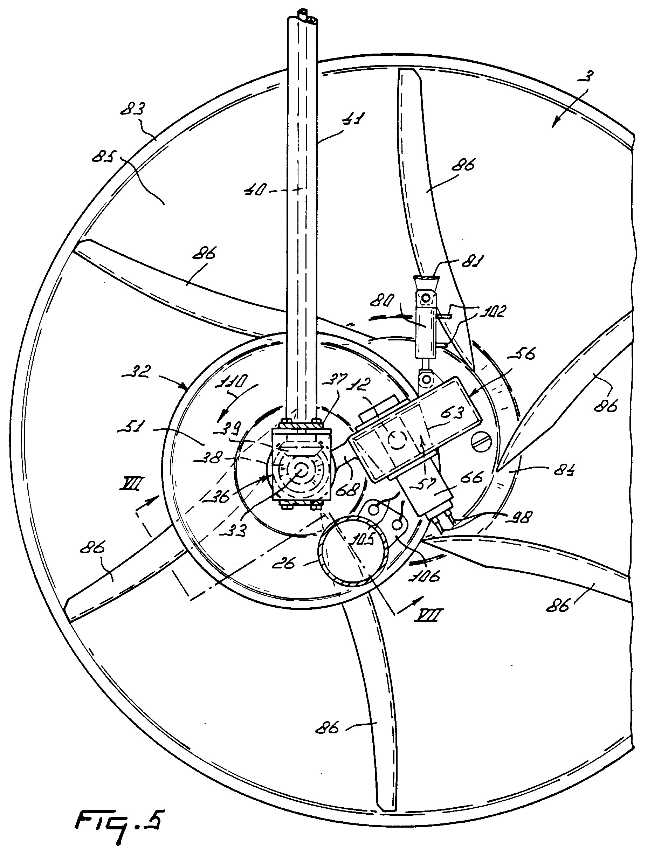

The first embodiment of the machine according to the invention as shown in Figures 1 to 9 has a frame 1, to which are fitted a hopper 2 and a spreading member 3. The frame 1 has a frame portion 4 which, in the horizontal position of the machine, extends vertically upwardly and comprises coupling members 5 and 6. By means of said coupling members 5 and 6, the machine can be coupled to the lifting arms 7 and to the top rod 8, respectively, of the lifting hitch of a tractor 9, as is shown in Figures 1 and 2. The frame 1 includes a horizontal frame portion 10 provided at the lower side of the frame portion 4. The frame portion 10 supports a gear box 11 wherein a shaft 12 is supported rotatably, to which shaft 12 the spreading member 3 is connected. The transmission members located in the gear box 11 are coupled to a coupling shaft 13, the leading end of which extends to near the frame portion 4. This leading end of the coupling shaft 13 can be coupled by means of an intermediate shaft 14 to the power take-off shaft of the tractor 9 or a suchlike vehicle, to which the implement can be coupled via the coupling members 5 and 6.

Seen in plan view, the hopper 2 is rectangular in shape and has a length 16 which, preferably, is more than 225 cms. In this embodiment the length 16 is 295 cms. During operation, the length 16 extends perpendicularly to the direction of operative travel 17 of the machine. The hopper has a width 18 which in this embodiment is approximately 135 cms. Preferably, the width 18 exceeds 100 cms. The hopper 2 has a depth 19 of approximately 70 cms. Near its upper side, the hopper is provided with vertical edges, whose lower sides are contiguous to the downwardly converging wall portions. In this situation, the hopper has a front wall 20 and a rear wall 21, which converge downwardly and are interconnected by an arcuate bottom 22. Like the front wall 20 and the rear wall 21, the side walls 23 and 24 extend at an angle of approximately 45° relative to the horizontal plane and are contiguous to the bottom 22. In its longitudinal direction, the bottom 22 extends transversely to the direction of operative travel 17 and is provided at least approximately in its centre with a flow-out aperture 25, to which a guide 26 is contiguous. In this embodiment, the guide 26 is constituted by a cylindrical discharge guide of circular cross-section. Above the bottom 22 there are arranged two supply members 27 and 28. In this embodiment, the said discharge members are helical ones which are rotatable about an axis of rotation 29. The axis of rotation 29 extends parallel to the bottom 22 and forms the centre of the circle of curvature thereof. The helical supply members 27 and 28 are wound in opposite directions.

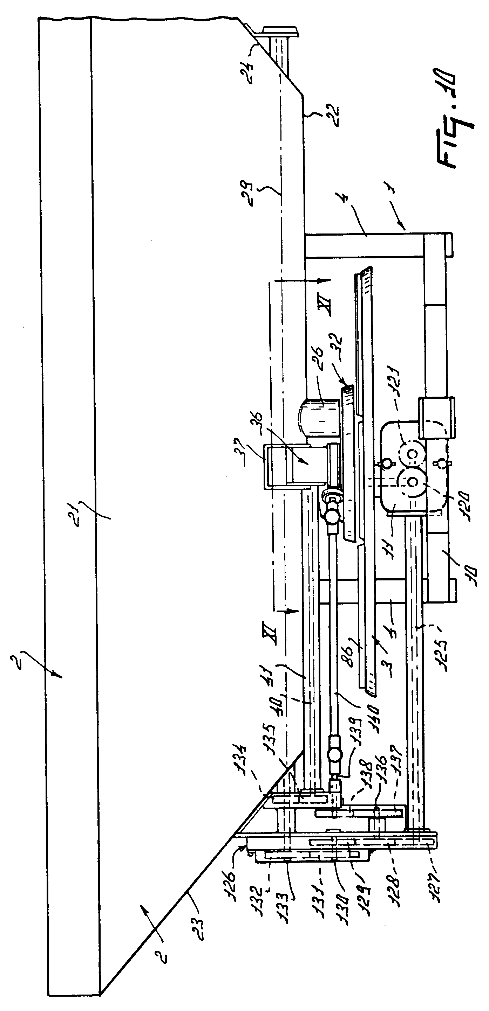

Between the hopper 2 and the spreading member 3 there is provided a doser member 32. In this embodiment, the doser member 32 is formed by a doser disc extending at least substantially parallel to the spreading member 3. The doser disc 32 is rotatable about an upwardly extending rotary axis 33. When the machine is in the horizontal position, the rotary axis 33 extends vertically. The rotary axis 33 extends parallel to the rotary axis 34, about which the shaft 12 of the spreading member 3 is supported rotatably in the gear box 11. In the horizontal position of the machine, the doser member 32 and the spreading member 3 extend horizontally. The doser member 32 is connected to a carrier shaft 35, which is bearing-supported in a box 36 suspended from the hopper 2 by means of a support 37. The box 36 comprises transmission members for the drive of the doser member 32. In this embodiment, the transmission members are constituted by bevel gear wheels 38 and 39 (Figure 9). The bevel gear wheel 38 is connected to the carrier shaft 35. The bevel gear wheel 39 is connected to a drive shaft 40 accommodated in a tubular sleeve 41. The drive shaft 40 extends from the gear box 36 to into a box 42 containing transmission members. The box 42 is fitted to a side wall of the hopper 2. The shaft 40 is located parallel to a shaft 43, on which the helical members 27 and 28 are disposed. The shafts 40 and 43 are coupled to each other by means of a gear transmission 44 (Figure 2). By means of a worm and worm wheel transmission 45, the shaft 44 is coupled to a drive shaft 46 of a hydraulic motor 47, which is also fastened to the side wall 23 of the hopper 2 in the region of the gear box 42.

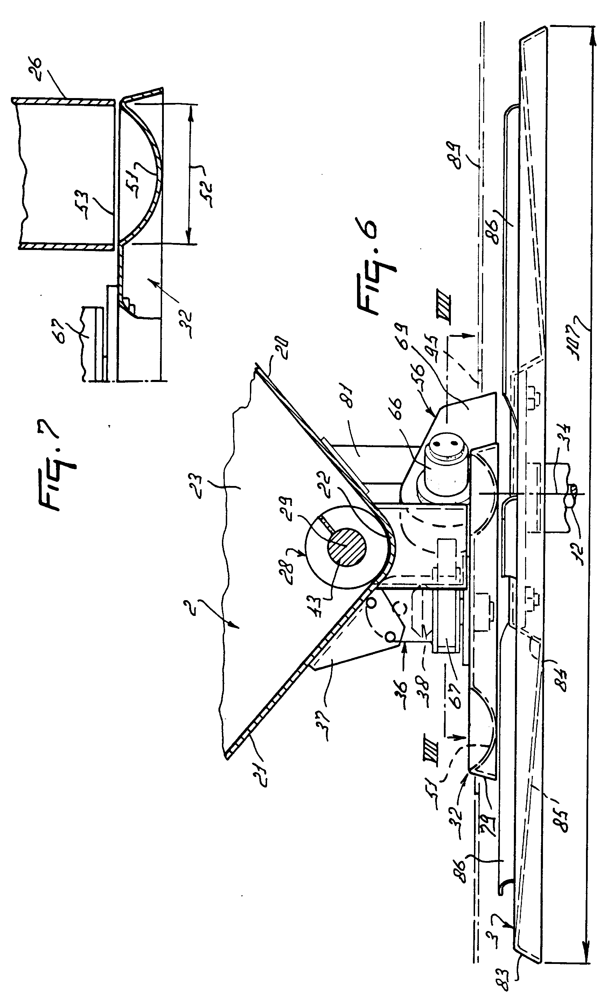

The doser member 32 comprises a conveyor member 51. In this embodiment, the conveyor member 51 is constituted by a conveyor groove. The conveyor groove 51 is located concentrically about the rotary axis 33 and near the periphery of the disc-shaped doser member 32. In this embodiment, in a sectional view (Figures 7 and 9), the conveyor groove 51 is formed by an arcuate bottom whose centre of curvature is located above the doser member 32. The guide 26 ends above the conveyor groove 51, as is apparent in particular from Figures 6 and 7. Preferably, the guide 26 has a width which, as in this embodiment, is equal to the width 52 of the conveyor groove 51. The lower side 53 of the guide 26 extends to near the upper side of the conveyor groove 51.

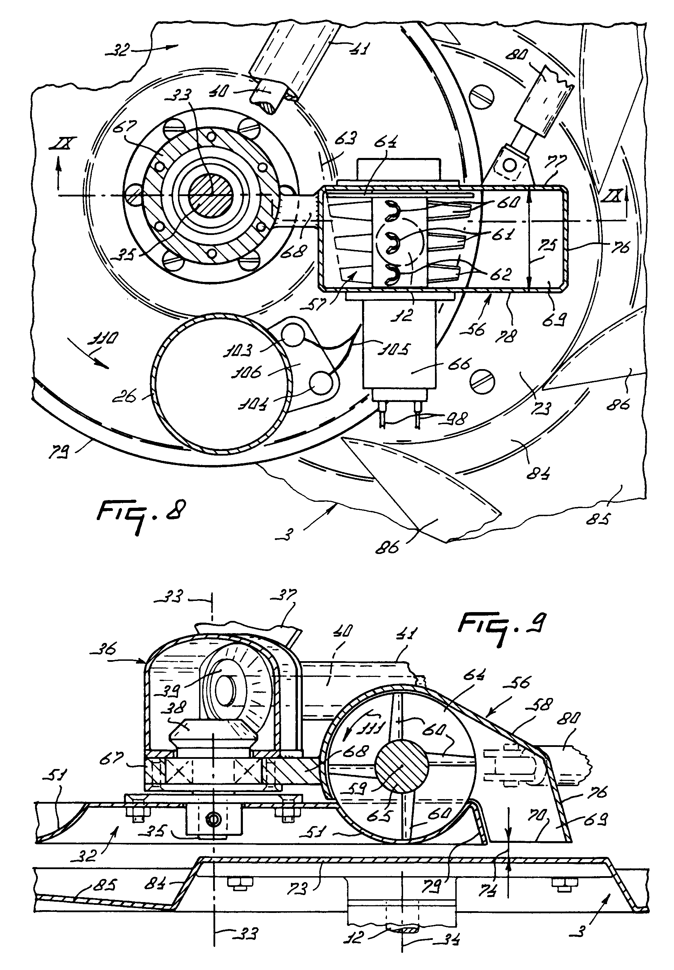

A distribution device 56 is provided such that it is contiguous to the doser member 32. The distribution device 56 includes a discharge device 57 and a hood 58 which partly encompasses the discharge device 57. The discharge device 57 comprises, in this embodiment, three sets of equispaced discharge members 60, 61 and 62 and a discharge member 64. The discharge members are rotatable about a rotary axis 59. Each set of discharge members 60, 61 and 62 comprises four arms which are equidistantly distributed about the rotary axis 59 and constitute thrower members of a trough-shaped cross-section, as is apparent in particular from Figure 8. The discharge members 60 to 62 are straight and, in this embodiment, extend perpendicularly to the rotary axis 59. The discharge members 60, 61 and 62 differ in length relative to each other, the discharge members 60 being longest and the discharge members 62 being shortest. The discharge member 61 located between the discharge members 60 and 62 have a length equal to the mean value of the lengths of the discharge members 60 and 62. In this situation, the ends of the discharge members 60 to 62 are located on an imaginary conical surface 63 situated concentrically about the rotary axis 59 (Figure 8). The discharge member 64 in the form of a discharge disc is arranged at that side of the discharge member 60 that is remote from the discharge members 61 and 62. The circumference of the disc 64, too, is located on the imaginary surface 63. The discharge members 60 to 62 and 64 are fitted together to a shaft 65 which is rotatable about the rotary axis 59 and is connected to a hydraulic motor 66. In this embodiment, the motor 66 is arranged at the hood 58. In a manner not shown in further detail, the shaft 65 is supported rotatably in the walls of the hood 58. The distribution device 56 includes a carrier ring 67 which is supported rotatably about the lower end of the gear box 36. By means of a supporting arm 68, the carrier ring 67 is coupled to the hood 58. The distribution device 56 is arranged such that the discharge disc 64 is in an approximately radial position relative to the rotary axis 33 of the doser member 32. The distribution device 56 is arranged such that the discharge disc 64 and the discharge members 60 to 62 extend to into the conveyor groove 51 of the doser member 32 (Figure 9). The discharge disc 64 is of such a diameter that its periphery extends to the bottom of the conveyor groove 51. The rotary axis 59 and the discharge disc 64 are then in such a position that the periphery of the discharge disc 64 is contiguous to the curvature of the arcuate bottom of the conveyor groove 51. Because the ends of the discharge members 60, 61 and 62, respectively, are located at a shorter distance from the rotary axis 59 than the periphery of the discharge disc 64 and the rotary axis 59 is located perpendicularly to a radial plane which encloses the rotary axis 33 and a side of the disc 64, the ends of the respective discharge members 60, 61 and 62 extend to an increasingly lower depth into the discharge groove 51, considered in the situation in which the discharge members rotate about the rotary axis 59.

The hood 58 connects up with the upper side and the periphery of the disc-shaped doser member 32 (Figures 6 and 9). The lower end of that portion 69 of the hood 58 that is located beyond the periphery of the doser member 32 forms, together with the periphery of the doser disc 32, a discharge channel 70 that ends above a central mid-portion 73 of the spreading member 3. In this situation, the lower end of the discharge channel 70 is approximately flush with the lower side of the doser member 32, it being located at a short distance 74 above the central portion 73 of the spreading member 3. The distance 74 may, for example, be approximately 10 mms. The discharge channel 70 has a width 75 which is approximately equal to the distance through which the discharge members 60 to 62 and 64 extend in a direction parallel to the rotary axis 59. The side walls 77 and 78 of the portion 69 extend, as is shown in plan view in Figure 8, perpendicularly to the rotary axis 59. The side walls 77 and 78 and the outer wall 76 of the portion 69 form, together with that portion of the peripheral edge 79 of the doser member 32 that is located under the hood 58, the discharge channel 70.

The distribution device 56 is coupled to an adjusting device 80. In this embodiment, the adjusting device 80 is constituted by a hydraulic mechanism which is connected pivotably to the distribution device and pivotably to a support 81 rigidly connected to the frame of the implement or to the hopper.

The spreading member 3 includes a disc-shaped portion 83 having a central portion 73. The periphery of the central portion 73 merges via a steep conical portion 84 into a slightly upwardly extending conical portion 85. As is apparent from Figure 6, the central portion 73 is at a slightly higher level than the highest outer periphery of the conical portion 85. Thrower blades 86 are provided on the conical portion 85.

Preferably, the spreading member is of a relatively large diameter. In this embodiment, the diameter 107 of the spreading member is approximately 110 cms. Preferably, the diameter 107 exceeds 85 cms. The tips of the thrower blades 86 reach as far as the outer periphery of the spreading member. In this embodiment, the tips of the thrower blades 86 are located at approximately the same distance from the rotary axis 34 as is the periphery of the disc 83. The disc 83 may have a smaller diameter than the diameter 107, which diameter is then formed by the tips of the thrower blades 86.

A carrier member 89 is disposed above the spreading member 3. The carrier member 89 is of such a shape that it can carry a plurality of measuring members or sensors provided at the periphery of the spreading member 3. In this embodiment, there are arranged five measuring members 90 to 94. The measuring members are distributed centrically about the rotary axis 34 of the spreading member 3. The outermost measuring members 90 and 94 of the row of measuring members 90 to 94 are positioned approximately diametrically opposite each other relative to the rotary axis 34. In this embodiment, the carrier member 89 is constituted by a flat disc whose diameter is somewhat larger than the periphery of the spreading member 3. Alternatively, the carrier member 89 may also be in the shape of a ring. The carrier member 89 is positioned centrically about the rotary axis 34 and is provided with an aperture 95 which, with some play, is contiguous to the periphery of the doser member 32. The measuring members 90 to 94 are coupled to a control mechanism 97 via lines which, preferably, are constituted by an optical fibre cable 96. The control mechanism 97 is coupled to the hydraulic motor 66 by means of lines 98. The control mechanism 97 is furthermore coupled via lines 99 to the hydraulic motor 47. In addition, the control mechanism 97 is coupled via lines 100 to a measuring member 101 which measures the rate of travel of the tractor 9. The control mechanism 97 is coupled to the adjusting device 80 via lines 102.

At least one, but, as in this embodiment, preferably two, distance measuring members 103 and 104 is/are arranged above the conveyor groove 51. Said distance measuring members 103 and 104 are located above the conveyor groove 51 between the guide means 26 and the distribution device 56. In this embodiment, the distance measuring members 103 and 104 are fitted on a supporting brace 106 connected to the guide means 26. The distance measuring members 103 and 104 are coupled to the control mechanism 97 via lines 105.

During use, the machine is coupled to the lifting hitch of a tractor or a suchlike vehicle, as is shown in Figures 1 and 2. With the object of driving the spreading member 3, the coupling shaft 13 is coupled to the power take-off shaft of the tractor by means of the intermediate shaft 14.

The machine has for its object to spread granular and/or pulverulent material, such as artificial fertilizer. The machine is used in particular for spreading material over agricultural fields, but basically it can be used alternatively for the spread of material over surfaces other than agricultural fields, e.g. for the spreading of material for gritting icy roads.

The material to be spread is spread over a wide strip during travel of the machine in the direction indicated by the arrow 17. During operation of the machine, the material to be spread is carried along in the hopper 2. The material is fed from the hopper 2 to the doser member 32 via the flow-out aperture 25 and the guide means 26. The material flowing from the guide means 26 is collected in the conveyor groove 51 and conveyed to the distribution device 56 via the conveyor groove. In this connection, the doser member 32 is caused to rotate, during operation, in the direction indicated by the arrow 110. The conveyor groove 51 constituting a conveyor member is filled fully or partly from the guide means 26. The material present in the conveyor groove is conveyed by rotation in the direction indicated by the arrow 110 to below the discharge device 57 comprising the discharge members 60 to 62 and the discharge disc 64. During operation, the discharge members 60 to 62 and the discharge disc 64 are caused to rotate about the axis of rotation 59 in a direction indicated by the arrow 111, as is shown in Figure 9. Because of the rotation of the discharge members 60 to 62, the material in the conveyor groove will be caught thereby and be thrown from the conveyor groove into the discharge channel 70. The material left over in the conveyor groove 51 after the discharge members 60 to 62 have passed, is discharged therefrom to the channel 70 by the discharge disc 64. Via the discharge channel 70, the material lands on the central portion 73 of the spreading member 3. The target position where the material discharged by the discharge members 60 to 62 and 64 from the conveyor groove 51 is fed to the spreading member 3 is constituted by the plane of projection of the feed-out of the discharge channel 70 on the spreading member 3. The target position in which the material fed to the spreading member lands on the central portion 73 of the spreading member, taken with respect to the rotary axis 34 and the direction of operative travel 17, determines, together with the speed of rotation and the shape of the spreading member 3, the direction in which the material is thrown by the spreading member. In this situation, the speed of rotation of the spreading member will predominantly determine the distance through which the material is thrown.

In this embodiment, the shape of the spreading member 3 and the position of the target position of the material on the spreading member have been chosen such that the material is flung away by the spreading member via its periphery through approximately 180° around the axis of rotation 34. Usually, the material is then spread via a spread sector 113 in such a manner that the spread lines 114 and 115 near the ends of the sector 113 extend at least approximately perpendicularly to a plane 112 extending in the direction of operative travel 17 and comprising the axis of rotation 34. However, the spread lines 114 and 115 extend from the spreading member in opposite directions away from said plane 112. The spread line 114 is located with respect to the direction of operative travel 17 to the right of said plane 112 and the spread line 115 to the left thereof. The spread sector 113 is then in its commonly used central position wherein the material is spread equally far to both sides of said plane 112.

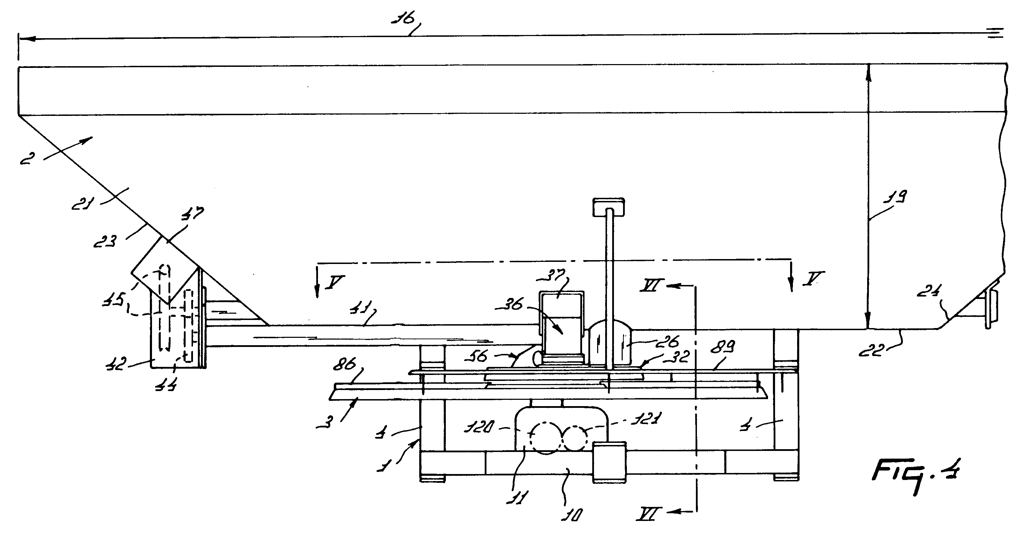

The measuring members 90 to 94 are arranged around the spreading member 3 in such a manner that, when the material is spread over the sector 113 in its central position, the five measuring members are located in the flow of material. The measuring members 90 and 94 are arranged such that they are located in the spread sector 113 near the spread lines 114 and 115. The measuring members are designed such that, upon contact with the material spread, an indication regarding same is provided to the control mechanism 97 via the line 96. When, during operation, all the measuring members 90 to 94 are hit by the material, then this is an indication that the spread sector 113 is in its central position. The control mechanism 97 comprises an electronic mechanism such that the data received from the measuring members 90 to 94 can be processed therein and can furnish an indication as to the position of the spread sector 113. This indication may be displayed on a display section 116 of the control mechanism 97. For that purpose, the display section 116 has a pointer 117 which, e.g. when the spread sector is in its central position, is located in the centre thereof. When the spread sector is shifted from its central position to one side or to the other, then at least either the measuring member 90 or the measuring member 94 will not be hit by the material or by too low a quantity thereof per unit of time during operation. This is an indication that the spread sector is not in the appropriate position. The indication of the measuring members 90 and 94, in particular, can provide via the pointer 117 a clue as to the position of the spread sector 113 with respect to its central position. When the pointer 117 deflects from the centre to one side or to the other, this is an indication that the spread sector has shifted about the axis of rotation 34 to one side or to the other with respect to its central position as shown in Figure 3 by the spread lines 114 and 115. This informs the driver of the tractor and the machine about the position of the spread sector 113.

In the embodiment shown in the Figures 1 to 9, the control mechanism 97 is of such a construction that the indication of the pointer 117 can be processed via the control mechanism 97 and can be conveyed by the control mechanism to the adjusting device 80 via the lines 102. The adjusting device 80 can be extended or shortened hydraulically in its longitudinal direction by control from the control mechanism 97, so that the distribution device 56 is capable of rotation about the rotary axis 33. By rotation of the distribution device 56, the place where the material is fed to the spreading member is shifted around the rotary axis 34 and relative to the direction of operative travel 17. This shift results in the material landing in a different place on the spreading member 3 with respect to the rotary axis 34. This change in the place of supply of the material to the spreading member has as a result that the direction wherein the material is thrown by the spreading member is adjusted. This causes the spread sector 113 to rotate about the axis 34. The shift of the spread sector will be controllable such from the control mechanism 97 that, for example, the two measuring members 90 and 94 are hit by material to a sufficient extent. When the measuring members 90 and 94 are hit again in the proper manner by the material, they will provide an indication to the control mechanism to the effect that the spread sector 113 is in the desired position about the rotary axis 34. Consequently, the control mechanism 97 will no longer influence the adjustment via the adjusting device 80, so that the position of the distribution device 56 is retained again in the selected position, thus maintaining the location of the sector 113 in, for example, its central position. Thus, the location of the spread sector is maintained automatically in the desired position by means of the control mechanism. For example, the desire of maintaining the spread sector 113 in its central position can be keyed-in in the control mechanism 97. It will be obvious that it is alternatively possible to opt for a spread sector position which is shifted to one side or to the other so as to have the possibility of spreading the material predominantly only to one side of the plane 112 or to the other. The position of the spread sector will then, for example, be such that either the measuring members 90 and 91 or the measuring members 93 and 94 are not located in the flow of material spread. The measuring members can furnish an indication for this position as well. It is alternatively possible to program the control mechanism 97 such that other locations of the spread sector, too, are set automatically. Preferably, the measuring members 90 to 94 are of such a type that they respond to the quantity of material contacting them per unit of time during operation. During operation, the material will be spread in a predetermined pattern over the spread sector 113. For example, more material will be thrown in the centre of the spread sector 113 by the spreading member 3 than near the spread lines 114 and 115. As a result thereof, the quantity of material hitting the measuring member 92 will be greater than that hitting the measuring members 91 and 93. The measuring members 91 and 92 will be hit by, for example, a still greater quantity of material than the measuring members 90 and 94. The measuring members are of such a structure that they can provide an indication as to the quantity of material thrown against them per unit of time. This indication can be passed on to the control mechanism 97 via the lines 96. The control mechanism 97 processes these data obtained from the measuring members 90 to 94. This processing provides that, if the distribution of the material over the sector 113 is not of the desired value, this is displayed by the control mechanism 97 e.g. on a display section. It is alternatively possible that the indication is conveyed, without display on a display section, as in this embodiment, to the hydromotor 66 via the lines 98. The number of revolutions of the hydromotor 66, and hence the speed of rotation of the discharge device 57 about the rotary axis 59, can be changed thereby. The discharge device 57 is such that, when its speed of rotation about the axis 59 is changed, the distribution of the discharge of material by the discharge device from the conveyor groove 51 can be changed. This renders it possible to change the distribution of the material over the cross-section of the flow-out aperture of the channel 70 and over the target area of the material on the spreading member. When, for example, a larger quantity of material is fed along the side wall 77 to the spreading member via the channel 70, then the material will be spread to a great extent towards the spread line 114. When a larger quantity of material is fed along the side wall 78 to the spreading member, then a smaller quantity of material will be fed along the side wall 77 to the spreading member via the channel 70. Consequently, a smaller quantity of material will be deposited near the spread line 114. Thus, the distribution of the quantity of material over the spread sector 113 can be changed by changing the speed of rotation of the discharge device 57 about the rotary axis 59. The change of the distribution of the material over the width 75 of the channel 70, and hence over the target position of the material at the spreading member, is basically possible because the quantity of material which each discharge member 62, 61, 60 or 64 discharges per unit of time from the conveyor groove 51 to the channel 70 can be controlled. When the speed of rotation of the distribution device 57 about the rotary axis 59 increases, then the discharge members 62 will be able to throw more material from the conveyor groove 51. When the discharge members 62 remove a larger quantity of material from the conveyor groove, then less material will remain in the conveyor groove 51 for the other discharge members. The higher speed also renders it possible for the discharge member 61 to remove a large quantity of material from the conveyor groove, so that less material remains for the discharge member 60 and thereafter still less for the discharge disc 64. Thus, because of a higher speed of the discharge device 57, the quantity of material discharged from near the wall 78 by the channel 70 will be larger than near the wall 77. This influences the distribution of the material on the target area of the material on the spreading member. This distributed supply on the spreading member has consequences for the distribution of the material over the spread sector 113. When the discharge device 57 is rotated at a low speed about the rotary axis 59, then the discharge members 62 will discharge less material from the conveyor groove 51. Likewise, the discharge members 61 will discharge less material from the relatively large quantity of material still remaining in the conveyor groove 51 after passage of the discharge members 62 than at a higher speed. Thus, more material can be discharged from the conveyor groove 51 by the discharge members 60 and the disc 64, so that more material is discharged from near the wall 77 through the channel 70. The discharge disc 64 operates such that, together with the conveyor groove 51, it completely discharges all the material left in the conveyor groove 51 after passage thereof under the discharge members 60 to 62 from the conveyor groove to the spreading member via the channel 70.

Consequently, the above-described mode of operation of the distribution device 56 and the measuring members 90 to 94 renders it possible to control automatically both the direction of spread of the material and the distribution over the spread sector 113.

The quantity of material to be discharged per unit of time by the discharge device 57 to the spreading member depends on the quantity of material fed per unit of time to the distribution device 57 by the doser member 32. The quantity of material fed to the discharge device 57 by the doser member 32 is controllable because of the fact that the speed of rotation of the doser member 32 about the rotary axis 33 can be changed. The speed of rotation of the doser member 32 can be changed, since the number of revolutions of the hydraulic motor 47 is controllable. When the number of revolutions of the doser member 32 is increased , a larger quantity of material will be fed per unit of time to the distribution member through the conveyor groove 51. For example, the number of revolutions of the hydraulic motor 47 can be set manually by the driver. Preferably, the measuring members 90 to 94 are of such a construction that they can also provide an indication as to the quantity of material hitting them per unit of time, e.g. in kgs or in a number of granules. These data are also an indication of the quantity of material spread per unit of time over the spread sector 113. This indication can be passed on to the control mechanism 97 via the line 96. In dependence on these data supplied by the measuring members 90 to 94 and in dependence on the speed of travel of the machine applied to the control member 97 from the mechanism 101 via the cable 100, the control mechanism 97 can furnish an indication as to the quantity of material spread per hectare. To that end, it is possible to input in the electronic mechanism via the keyboard 118 of the control mechanism 97 over what width the material is to be spread. By means of the data thus obtained, the control mechanism 97 gives an indication as to the quantity of material spread per unit of surface area. This may be displayed in the display section 119 of the control mechanism 97. If this quantity is too large or too small, the number of revolutions of the motor 47 can be changed, so that optionally via the doser mechanism 32 a greater or lesser quantity of material is fed to the discharge member 57. The control mechanism 97 may be of such a construction that the indication as to the quantity of material actually spread per unit of surface is processed by the electronic section of the control mechanism in relation to the quantity of material desired to be spread per unit of surface. For example, the quantity desired to be spread per hectare can be inputted in the electronic section of the control mechanism. In dependence on whether this desideratum corresponds to the actual values obtained from the data supplied by the measuring members 90 to 94 and the member 101, the motor 47 can be controlled by means of the control mechanism 97 to drive the doser mechanism 32 at a higher or a lower speed about the rotary axis 33. Thus, the quantity of material fed per unit of time to the spreading member and spread thereby can be brought into agreement with the quantity desired to be spread at a given rate of travel per unit of time and, hence, per unit of surface area. The doser member 32 is so arranged relative to the guide means 26 that on rotation thereof the conveyor groove 51 will be filled up to the top. The fill level of the conveyor groove can be checked by means of the distance measuring devices 103 and 104. When the conveyor groove has not been filled properly, the distance measuring members 103 and 104 will convey an indication to the control mechanism 97 via the line 105. This indication may be displayed by the control mechanism for the driver of the machine. In this embodiment, the control mechanism 97 is of such a construction that these data are processed and, if necessary, the speed of rotation of the hydraulic motor 47 is changed automatically so as to enable the supply of the desired quantity of material per unit of time to the distribution device and the spreading member. The motor 47 also drives the conveyor worms 27 and 28 via the drive in the gear box 42. At a higher number of revolutions of said conveyor worms, a large quantity of material will be fed to the guide 26 through the discharge outlet 25, so that more material can be fed to the conveyor groove 51 per unit of time. Thus, the speed of rotation of the doser member and the fill level of the conveyor groove 51 can be brought into agreement with each other so as to enable the desired quantity of material to be fed to the spreading member 3 per unit of time. An indication can be obtained as to the quantity of material spread over the sector 113 per unit of time, both in dependence on the indications given by the distance measuring members 103 and 104 and in dependence on the data produced by the measuring members 90 to 94. When the distance measuring members 103 and 104 are used, the measuring members 90 to 94 need not be of such a construction that they also furnish an indication as to the quantity of material spread per unit of time. In the embodiment shown, the measuring members 90 to 94 and the distance measuring members 103 and 104 may constitute systems which check each other on the quantity of material spread per unit of time and, hence, per hectare. In case these data are not in agreement, the control mechanism 97 may furnish an indication that somewhere there is a disturbance in the operation of the machine. Thus, with the machine according to the invention it is possible to automatically control in an advantageous manner that the material is spread in the desired direction and in the proper quantity per unit of surface area. At the same time, it is possible to control the distribution of the material over the spread sector and, hence, over the width of the strip over which the material will be spread during travel of the machine in the direction 17. Thus, it is possible, in a simple manner and fully automatically, to maintain the spread pattern obtained with the machine at the desired value. The data obtained by the measuring members 90 to 94 and the distance measuring members 103 and 104 can be conveyed advantageously to the control mechanism 97 via the respective lines 96 and 102, when the lines are optical glass fibres. Optical glass fibres can be utilized advantageously, particularly in agricultural machines. Agricultural machines are subject to contamination by earth and can furthermore easily come into contact with obstacles. The control mechanism 97 is constructed such that it can easily be installed in or removed from the cabin of a tractor or suchlike vehicle, to which the machine is coupled. After the machine has been used, the control mechanism 97 can be removed easily from the tractor when the machine is detached from the tractor.

The various lines to the hydraulic members, such as the hydromotors, can be connected to the hydraulic circuit of the tractor. The control of the quantity of fluid to be fed from the hydraulic circuit to the various members, such as the motors 47, 66 and the member 80, can be effected by means of the control mechanism 97. The control mechanism 97 can advantageously and more specifically be a computer-controlled one.

The distance through which the material is thrown by the spreading member can be adjusted by a change of the number of revolutions of the spreading member 3. For that purpose, the gear box 11 is provided with a transmission mechanism having two change gear wheels 120 and 121 which are interposed between the coupling shaft 13 and the shaft 12, to which the spreading member 3 is fitted. By interchanging the change gear wheels 120 and 121 or by changing said wheels for a different set of gear wheels, the drive from the coupling shaft 13 to the shaft 12 can be adjusted. When, for example, because of the larger distance through which the material is spread by the spreading member during travel in the direction 17, the width of the strip over which the material is spread changes, then the quantity of material spread per hectare can change. The change of the spread width can be inputted into the control mechanism via the keys 118. Partly in dependence on the spread width over which the material is spread, the control mechanism adjusts the speed of rotation of the doser member 32. In addition, it remains possible to check by means of the measuring members 90 to 94 and 103 and 104 whether the desired results are achieved, as described in the foregoing.

In the embodiment of the machine according to the invention shown in Figures 1 to 9, the manner in which the material is fed to the spreading member is used in combination with measuring members provided around the spreading member, the arrangement being such that the overall control of the direction of spread, the distribution of the material over the spread sector and the quantity of material to be spread per unit of surface area can be adjusted automatically. Then, the various measuring members apply the desired indication to the control mechanism 97. The adjusting device 80 and the speed of the hydromotors 47 and 66 are controlled via the control mechanism 97. Although in the embodiment shown the total assembly of the controllable members is automatically driven via the control mechanism 97, it is alternatively possible to control manually one or more of the controllable members in dependence on, for example, indications displayed by the measuring members on a display section. The mode of feeding the material to the spreading member by means of a distribution device and/or a doser member, such as the distribution device 56 and the doser member 32, is also suitable for use without measuring members, such as, for example , the members 90 to 94 and 103 and 104. The speeds of rotation of the doser member 32 and the distribution device 57 as well as the adjustment of the member 80 may be set by hand in dependence on, for example, previously made spread tests or on the basis of tables previously composed on the basis of different spread tests under varying conditions and using other types of material.

A machine according to the invention, and wherein the material is fed to the spreading member without the feature of automatic control of these feeding means by the measuring members, may basically be identical to the machine shown in the embodiment of Figures 1 to 9 wherein the measuring members 90 to 94 and 103 and 104 and a control mechanism 97 have been omitted. In such a simpler machine it is possible that, for example, the drive of the speed control of the conveyor worms 27 and 28 and of the doser member 32 is driven by a hydraulic motor 47 whose number of revolutions can be set manually. The hydraulic drive may alternatively be replaced by a gear wheel drive containing change gear wheels so as to enable the control of the numbers of revolutions of the conveyor worms 27 and 28 and of the doser mechanism 32. The discharge device 57 driven by the hydraulic motor 66 can then also be replaced by a gear drive. A drive using gear wheels can, for example, be operated by the drive shaft 13 which is connectable to the power take-off shaft. The feature of adjustability of the distribution member 56 by means of a hydraulic adjusting device 80 can, for example, be provided in a simple way by means of an adjusting device that can be set by hand.

Figures 10 to 13 illustrate some further details of a machine according to the invention, in which the automatic control by measuring members is replaced by a manually operable drive mechanism and adjusting device. In this second embodiment, components corresponding to those in the first embodiment are given the same reference numerals as in the first embodiment. In addition, the corresponding members are not shown in detail once more. Therefore, Figures 10 to 13 of the second embodiment only show the main components, such as the hopper 2, the spreading member 3 and the doser member 32 with distribution device 56. In the second embodiment, the drive of the conveyor worms 27 and 28, of the doser member 32 and of the discharge member 57 is obtained from the drive shaft 13, which is not shown in the embodiment illustrated in Figures 10 to 13. The drive shaft 125 is driven from the drive of the shaft 13 in such a manner that the said shaft 125 rotates at the same speed as the shaft 13. Consequently, the drive of the shaft 125 from the shaft 13 is effected independently of the change gear wheels 120 and 121. The shaft 125 drives the relevant members to be driven via transmission members in a gear box 126. In this situation, the shaft 125 is coupled to a gear wheel 127 which is connected via a gear wheel 128 to a gear wheel 129 provided on a shaft 130 which is bearing-supported in the gear box 126. A shaft 133, which carries the conveyor worms 27 and 28 or is connected thereto, is drivable via the change gear wheels 131 and 132. By means of the gear wheels 134 and 135, the shaft 133 is coupled to the shaft 40 which, as in the preceding embodiment, controls the drive of the doser member 32. Consequently, in this second embodiment, the speed of rotation of the conveyor worms 27 and 28 and of the doser member 32 is adjustable by interchanging the gear wheels 131 and 132 or by exchanging them for different gear wheels. Therefore, this change in rotation of the conveyor worms 27 and 28 and of the doser member 32 can be effected by the change gear wheels 120 and 121, independently of the change in speed of the spreading member 3. The gear wheel 128 accommodated in the gear box 126 is connected to a shaft 136 which is provided with a change gear wheel 137. The change gear wheel 137 meshes with a change gear wheel 138 which is provided on a shaft 139. The shaft 139 is coupled via a coupling shaft 140 to the shaft of the discharge device 57. The drive of the shaft 140 and, hence, of the discharge device 57 can be adjusted by means of the change gear wheels 137 and 138, independently of the speed of rotation of the doser member 32 and of the conveyor worms 27 and 28 as well as independently of the speed of rotation of the spreading member 3, which latter speed can be changed by means of the change gear wheels 120 and 121. In accordance with this embodiment, the speed of rotation of the various members shown, such as the conveyor worms 27 and 28, the doser member 32 and the discharge device 57, as well as the speed of rotation of the spreading members 3 can be chosen , via the change gear wheels shown, in dependence on spread tests and/or tables. In this embodiment of Figures 10 to 13, the direction of spread, which can also be obtained from the spread tests, is adjustable by means of the distribution device 56 via a manually controllable adjusting device 141. To that end, the length of the adjusting device can be reduced or increased. For that purpose, the adjusting device 141 is provided with a bushing 142 which co-operates with two threaded ends, provided in said bushing, of spindles 143 and 144, one of which spindles is coupled to the frame and one to the distribution device 56. Thus, the position of the discharge channel 70 above the spreading member can be set relative to the axis of rotation 34.

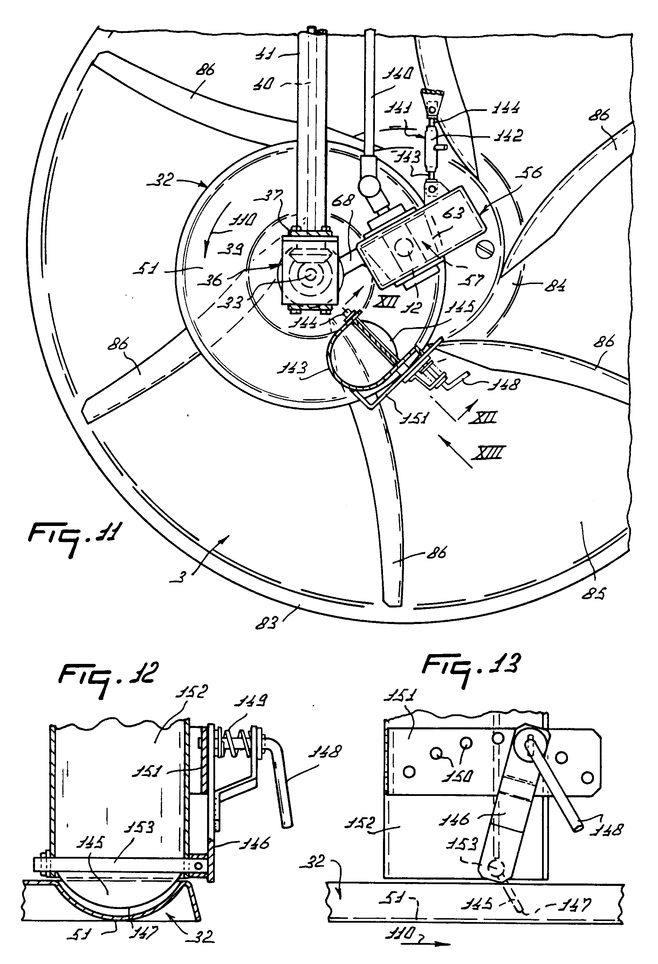

As the speed of rotation of the doser member 32 cannot be adjusted so easily within wider limits because of the gear wheel drive, a manually adjustable valve can be provided in the guide means 26. With the aid of the manually adjustable valve, the quantity of material to be discharged on the conveyor groove can be adjusted. As is shown in Figures 11 to 13, a guide means 152 corresponding to the guide means 26 is disposed between the hopper 2 and the doser member 32. Like the guide means 26, the guide means 152 is a cylindrical member whose lower end is shown in greater detail in a cross-sectional view in Figure 12. Near the lower end of the guide means 152 there is provided a valve 145 which can be moved by means of a pivot shaft 153. The valve 145 is adjustable by an adjusting arm 146. The valve 145 can be adjusted such that it can be moved to an almost horizontal position wherein it is in a position higher than the upper side of the sides of the discharge groove 51, and to a lower position wherein it reaches to near the bottom of the discharge groove 51. The valve 145 has such a peripheral edge 147 that, in a vertical position, it substantially touches the bottom of the discharge groove, so that no material can be conveyed in the groove passing under the valve 145. The material is supplied to the conveyor groove 51 through the guide means 152 at that side of the valve 145 that is remote from the side of the valve 145 to which the material can be conveyed by the direction of rotation 110 of the doser member 32. In the position of the valve 145 that deviates from the vertical, the valve 145 is directed from the pivot shaft 153 to that side that corresponds to the direction of rotation 110. Thus, in the horizontal position, the valve faces away from the side of the guide means 152 through which the material is fed to the conveyor groove 51. The position of the valve 145 can be adjusted by a locking pin 148 fitted to the adjusting arm 146. The locking pin 148 can optionally be inserted under the action of a spring 149 into one of a plurality of apertures 150, which are provided in a strip 151 connected to the guide 152.

In this second embodiment, the quantity of material supplied to the distribution device 56 per unit of time can be adjusted by changing the speed of rotation of the doser member 32 and/or changing the thickness of the layer of material movable in the conveyor groove 51. This thickness of the layer present in the discharge groove can then be adjusted by providing the valve 145 such that its lower edge 47 is located at a larger or less large distance from the bottom of the conveyor groove 51.

Using the embodiment as shown in Figures 10 to 13, a machine according to the invention can be obtained which may be less expensive because of the omission of the automatic control. In particular, a machine as shown in Figures 10 to 13 is important so as to still allow of the supply of the material to the spreading member in the manner according to the invention in the absence of an automatic control. Thus, in addition to the adjustability of the direction of spread and of the quantity of material to be spread per unit of time, the distribution of the material over the spread sector can be controlled advantageously as well. Preferably, both in the first and in the second embodiment, the distribution device 56 is arranged comparatively close to the respective guide means 26 and 152. Thus, it will not be possible for the distribution of the material in the conveyor groove between the respective guide means 26 and 152 and the distribution device 56 to be disturbed by jolting movements of the machine, when travelling over uneven fields.

The large diameter of the spreading member has the advantage that the material leaves the spreading member over a comparatively large distance in an absolute sense, for the distance between the spread lines 114 and 115 along the periphery of the spreading member is large. Consequently, the direction of spread and the distribution of the material over the spread sector can be influenced advantageously by means of the distribution device 56.

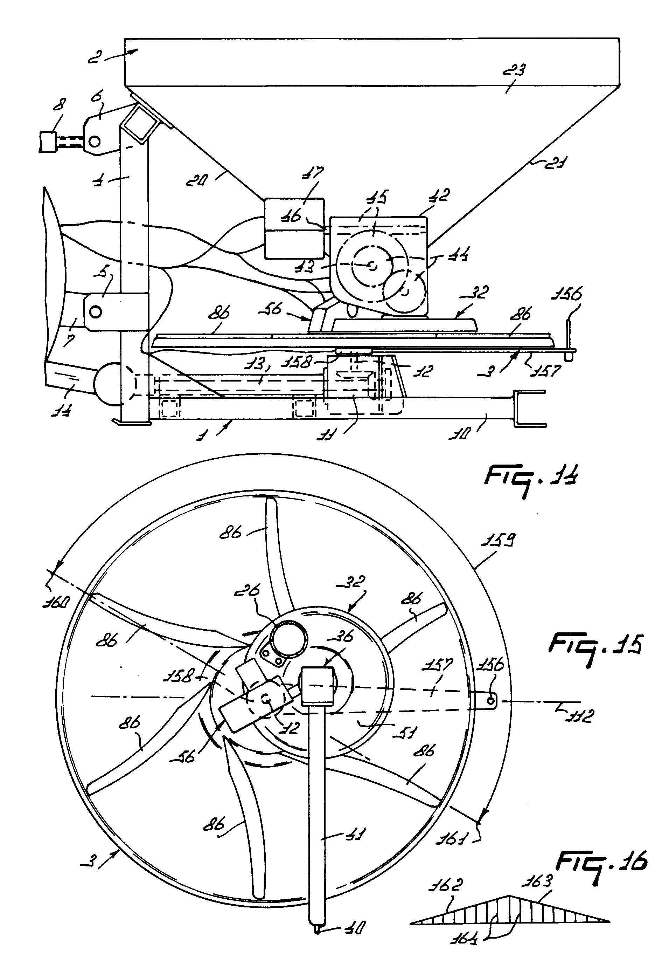

In the embodiment according to Figures 1 - 9 there are arranged about the spreading member 3 five measuring members 90 to 94. Each of said measuring members has a fixed position relative to the rotary axis of the spreading member and to the frame 1 of the machine. Together the said five measuring members provide an indication as to the direction of spreading wherein the material is spread by the spreading member, i.e. the position of the spread sector 113 relative to the plane 112. The measuring members furthermore provide an indication as to the distribution of the material over the spread sector 113 as well as as to the quantity of material spread by the spreading member per unit of time. It is alternatively possible to replace the five measuring members 90 to 94 by one measuring member that moves around at least part of the spreading member's periphery during operation of the machine. Such a measuring member may, for example, move centrically about the rotary axis 34 of the spreading member over an angle which is equal to that whereover the measuring members 90 to 94 are distributed about the rotary axis 34 of the spreading member. Figures 14 and 15 show a schematical rendering of such an embodiment.

In the embodiment according to Figures 14 and 15, the parts corresponding to those in the preceding embodiments are denoted by the same reference numerals. A measuring member 156 is attached to an arm 157 which is arranged to a bearing 158. Like the measuring members 90 to 94, the measuring member 156 provides an indication as to the quantity of material hitting same per unit of time. The bearing 158 is arranged movably over an angle about the rotary axis 34. In this connection, the bearing 158 is movable about the rotary axis 34 independently of the rotation of the spreading member 3. By means of a drive mechanism not shown in further detail, the bearing 158 is movable about the rotary axis 34 over an angle 159, which angle corresponds to that whereover the measuring members 90 to 94 are distributed about the rotary axis 34. In the embodiment according to Figures 1 to 9, this angle is approximately 180°. In this connection, the measuring member 156 may, for example, be reciprocated over the angle 159. The ends of the path along the spreading member's periphery over which the measuring member is movable within the angle 159 is constituted by the end positions 160 and 161, which positions correspond to the positions of the measuring members 90 and 94 in the first embodiment. The drive of the bearing 158 may be such that the measuring member 156 moves from the position 160 as the starting position towards the position 161 as the final position. The measuring member 156 may cover the angle 159 within a specific length of time. This length of time is selected such that the measuring member moves about the rotary axis 34 at a rate which differs from that of the spreading member 3. For example, this length of time may be ten seconds. However, this length of time, and hence the rate of movement of the measuring member, may also be chosen differently. During coverage of the angle 159, the measuring member 156 will be hit by the material spread by the spreading member 3 during operation of the machine. The measuring data obtained by the measuring member 156 from the spread material may be transferred to the control mechanism 97, which measuring data are continuously related to the position of the measuring member 156 within the angle 159.

By means of a measuring member moving about the rotary axis 34, and hence about the periphery of the spreading member 3, it is possible to effect the measurement within the angle 159 continuously or at intervals of e.g. 10° therewithin. The measuring member 156 may also be moved intermittently over the angle 159, i.e. that the measuring member 156, after having covered a specific angle of e.g. 10° or 20°, is stopped for one or more seconds in order to carry out a measurement. Thus, in particular the distribution of the material over the spread sector 113 can be measured at wish.

The indications given by the measuring member 156 can be processed by the control mechanism 97 to fulfill the same control functions as has been described in the foregoing with respect to the embodiment according to Figures 1 to 9. These data may also be displayed in a display section or otherwise, so that on the basis thereof the various control members can be operated by hand, as has been indicated with reference to the preceding embodiments.

The drive of the measuring member 156 may, for example, be effected from the shaft 13. If so desired, the drive may also be arranged such that it can be adjusted in the desired manner by an adjusting mechanism provided in the control mechanism 97. The measuring member 156 may, for example, be moved at a desired rate from the starting position 160 towards the final position 161 and be returned to the starting position 160 in a quick movement, whereafter it will re-start its movement under continuous or intermittent measurement. It is equally possible for the measuring member 156 to be reciprocated between the end positions 160 and 161 in the same manner, so that it carries out measurements both during the movement into the direction of the one end position and during the movement into the direction of the other end position. In order to obtain the desired movements of the measuring member 156, the drive of the bearing 158 with the arm 157 may be chosen at wish.

The data obtained by the measuring member 156 may, for example, be displayed in a display section in the control mechanism 97, e.g. in the display sections 116 and 119. In the display section 116 may be indicated the spreading pattern as is shown schematically in Figure 16. If, for example, the material is spread by the spreading member 3 in such a manner that the quantity of material spread per unit of surface its greatest near the central plane 112 and gradually decreases towards the edges of the spread width, then the spread pattern as shown in Figure 16 will have a triangular shape, which can be displayed as such in the display section 116. If the measurement carried out by the measuring member 156 is a continuous one, it will, for example, be possible to show in the display section 116 the lines 162 and 163 as an indication of the distribution of the material over the spread sector. If, for example, the measuring member gives a signal over every 10° about the rotary axis 34, in the said display section 116 an indication may be given as shown in Figure 16 by means of the lines 164, the top ends of which lines are situated on imiginary lines which correspond to the lines 162 and 163. Thus, in the display section 116 there can be shown quickly and well readably whether a desired quantity distribution over the spread sector 113 is obtained. The location of the spread sector may, for example, be indicated by that displayed in Figure 16 relative to e.g. the centre of the display section 116. If the figure shown in Figure 16 is located out of the centre of the display section, this may be an indication that the spread sector 113 does not extend equally far on either side of the central plane 112. Therefore, the location of the spread sector can also be checked by the measuring member moving over the angle 159. Like in the preceding embodiments, the measuring member will give an indication as to the quantity of material spread per unit of time. Thus, it is also possible to adjust the quantity of material supplied per unit of time to the distribution device 56 and to the spreading member 3, the arrangement being such as has been described in a corresponding manner with respect to the preceding embodiments.

Although in the embodiment according to Figures 14 to 16 there is shown only one movable measuring member, there may also be two measuring members or more. Then, each of the various measuring members may be reciprocated over part of the angle 159 to be measured. However, it will also be possible for one or various measuring member(s) to be moved along the spreading member's periphery in a circulating movement about the rotary axis 34. In that case, the measuring members will only collect positive measuring data regarding that part of the periphery over which material is spread by the spreading member.

## Claims

1. A machine for spreading material, in particular granular and/or pulverulent fertilizers such as artificial fertilizer, which machine comprises a frame (1), a hopper (2) and at least one drivable spreading member (3), by means of which the material can be spread over the soil, which machine is provided with a distribution device (56) comprising at least two discharge members (60 to 64) via which material can be fed to the spreading member, the feed capacity of the one discharge member relative to the feed capacity of the other discharge member being adjustable, characterized in that a number of measuring members are provided and distributed around at least a part of the periphery of the spreading member or at least one measuring member being provided so as to be movable around a part of the periphery of the spreading member to effect a measurement in at least a number of different points distributed over the said part, said measuring member(s) each providing an indication about the quantity of material spread per unit of time against the same, said measuring members, respectively said movable measuring member being coupled with a control mechanism (97) processing the data of the measuring members respectively the movable measuring member and providing data of the distribution of the material over the said part around the periphery of the spreading member, the feed capacity of said discharge members being adjustable in response to the processed data of the control mechanism.

2. A machine as claimed in claim 1, characterized in that the measuring members (90 to 94), respectively movable measuring member (156) provide(s) an indication as to the direction of spread around the periphery of the spreading member.

3. A machine as claimed in claim 1 or 2, characterized in that the measuring members (90 to 94), respectively the movable measuring member (156) provide(s) an indication as to the quantity of material spread per unit of surface area.

4. A machine as claimed in claim 1, 2 or 3, characterized in that the movable measuring member (156) effects the measurement within the said part around the periphery of the spreading member continuously or at intervals therewithin.

5. A machine as claimed in claim 2, characterized in that the control mechanism (97) furnishes an indication to the driver of the machine as to the measuring data supplied by the measuring members (90 to 94), respectively the movable measuring member.

6. A machine as claimed in any one of the preceding claims, characterized in that the discharge members (60 to 64) co-operate with a conveyor member (32, 51), by means of which the material is fed to the distribution device (56), the discharge members (60 to 62, 64) are of different constructions relative to each other and/or are arranged differently relative to the conveyor member and the discharge members can feed the material from the conveyor member (32) to the spreading member.

7. A machine as claimed in any one of the preceding claims, characterized in that the discharge members (60 to 64) are provided movably about a rotary axis (59) in the machine, and that the rate at which the discharge members are movable during operation can be adjusted.

8. A machine as claimed in claim 6 or 6 and 7, characterized in that the conveyor member (32, 51) is a conveyor member in the form of a groove (51) which is pivotal around an axis of rotation (33), and that, in a cross-sectional view, the groove-shaped conveyor member (51) constitutes a segmental portion of a circle, at least one discharge member (64) having a peripheral shape which for at least a part is matched to the cross-section of the conveyor groove (51) and is contiguous to the inner side thereof in such a manner that this discharge member (64) shuts off the conveyor groove (51) in its transport direction (110).

9. A machine as claimed in claim 8, characterized in that the speed of the conveyor member (51) is controllable.

10. A machine as claimed in claim 8 or 9, characterized in that between the hopper (2) and the conveyor groove (51) a guide means (26) is provided, whose bottom side is contiguous to the upper side of the conveyor groove (51) and whose upper end is contiguous to a discharge aperture (25) of the hopper (2).

11. A machine as claimed in claim 10, characterized in that near the bottom side of the guide means (26) a valve-shaped mechanism (145) is provided, by means of which the groove-shaped conveyor member (51) optionally can be closed to a greater or lesser extent, as seen in a cross-sectional view of the groove-shaped conveyor member.

12. A machine as claimed in any one of the preceding claims, characterized in that the discharge members (60-64) are contiguous to a discharge channel (70), which extends between the discharge members (60-64) and the spreading member (3).

13. A machine as claimed in any one of the preceding claims, characterized in that the distribution device (56) is adjustable relative to the position in which the spreading member (3) is located in the machine.

14. A machine as claimed in any one of claims 6 to 13, characterized in that at least one distance measuring member (103, 104) for measuring the thickness of the layer of material on the conveyor member (51) is disposed above the conveyor member.

15. A machine as claimed in any one of claims 1 to 5 and any one of claims 6 to 14, characterized in that the control mechanism (97) which includes an electronic control mechanism, by means of which the speed of rotation of the conveyor member (32, 51) and/or the rate of travel of the discharge members (60 to 62, 64) and/or the distribution device (56) can be adjusted.

16. A machine as claimed in claim 15, characterized in that the electronic mechanism has keys (118), by means of which the quantity of kilogrammes to be spread per hectare and/or the width over which the material is spread can be inputted into the electronic mechanism (97).

17. A machine as claimed in claim 15 or 16, characterized in that the distance measuring members (103, 104) are coupled to the control mechanism (97), the distance measuring members constituting a control mechanism for controlling the speed at which the conveyor member (32, 51) moves.

18. A machine as claimed in any one of the preceding claims characterized in that the distance measuring members (103, 104) and/or the measuring members (90 to 94, 156) are coupled to the control mechanism (97) via an optical fibre cable.

19. A machine as claimed in any one of the preceding claims, characterized in that the hopper (2) has an elongate bottom (22) which is provided with at least one discharge outlet (25), and at least one supply member (27, 28) is provided in a longitudinal direction above the bottom for feeding the material from the hopper to the discharge outlet (25), said supply member being coupled to drive members, by means of which the movement of the supply member is controllable.

20. A machine as claimed in any one of the preceding claims, characterized in that the machine has drive members, by means of which the speed of rotation of the spreading member (3) is controllable.

21. A machine as claimed in any one of the preceding claims, characterized in that the drive for the doser member (32) and/or the supply members (27, 28) and/or the drive of the discharge members (60 to 62, 64) and/or the adjustable distribution device is effected by hydraulic motors (47, 66) which are drivable by the control mechanism (97).

## Patentansprüche

1. Streumaschine, insbesondere für körnigen und/oder pulverigen Dünger wie Kunstdünger, mit einem Rahmen (1), einem Vorratsbehälter (2) und mindestens einem antreibbaren Streuglied (3), mittels dessen das Gut auf dem Boden auszustreuen ist; die Maschine hat einen Verteiler (56) mit mindestens zwei Austraggliedern (60 bis 64), über welche das Gut dem Streuglied zuzuführen ist, wobei die Austrogkapazität des einen Austraggliedes relativ zu der Austragkapazität des anderen Austraggliedes einstellbar ist,
dadurch gekennzeichnet, daß mehrere Meßelemente vorgesehen und über mindestens einen Abschnitt der Peripherie des Streugliedes verteilt sind, oder daß mindestens ein Meßelement vorgesehen ist, das entlang eines Abschnittes der Peripherie des Streugliedes zu bewegen ist, um an mindestens einigen verschiedenen, über diesen Abschnitt der Peripherie verteilten Punkten eine Messung vorzunehmen, wobei das/die Meßelement(e) jeweils eine Anzeige bezüglich der Menge des pro Zeiteinheit ausgestreuten Gutes liefert/liefern, von dem es/sie getroffen wurde(n), und wobei die Meßelemente bzw. das bewegbare Meßelement mit einer Steuervorrichtung (97) verbunden sind/ist, die die Daten der Meßelemente bzw. des bewegbaren Meßelementes verarbeitet und Daten bezüglich der Verteilung des Gutes auf den Abschnitt der Peripherie des Streugliedes liefert, und wobei die Austragkapazität der Austragglieder entsprechend den verarbeiteten Daten der Steuervorrichtung einstellbar ist.

2. Maschine nach Anspruch 1,
dadurch gekennzeichnet, daß die Meßelemente (90 bis 94) bzw. das bewegbare Meßelement (156) eine Anzeige bezüglich der an der Peripherie des Streugliedes vorhandenen Streurichtung liefern/liefert.

3. Maschine nach Anspruch 1 oder 2,
dadurch gekennzeichnet, daß die Meßelemente (90 bis 94) bzw. das bewegbare Meßelement (156) eine Anzeige bezüglich der pro Oberflächeneinheit ausgestreuten Gutmenge liefern/liefert.

4. Maschine nach Anspruch 1, 2 oder 3,
dadurch gekennzeichnet, daß das bewegbare Meßelement (156) die Messung innerhalb des Abschnittes der Peripherie des Streugliedes kontinuierlich oder intervallmäßig durchführt.

5. Maschine nach Anspruch 2,
dadurch gekennzeichnet, daß die Steuervorrichtung (97) dem Fahrer der Maschine eine Anzeige bezüglich der von den Meßelementen (90 bis 94) bzw. dem bewegbaren Meßelement gelieferten Meßdaten liefert.

6. Maschine nach einem der vorhergehenden Ansprüche,
dadurch gekennzeichnet, daß die Austragglieder (60 bis 64) mit einer Fördervorrichtung (32, 51) zusammenwirken, mittels der das Gut dem Verteiler (56) zugeführt wird, wobei die Austragglieder (60 bis 62, 64) relativ zueinander unterschiedlich ausgebildet und/oder relativ zu der Fördervorrichtung unterschiedlich angeordnet sind, und wobei das Gut mittels der Austragglieder von der Fördervorrichtung (32) zu dem Streuglied zu befördern ist.

7. Maschine nach einem der vorhergehenden Ansprüche,
dadurch gekennzeichnet, daß die Austragglieder (60 bis 64) in der Maschine um eine Drehachse (59) bewegbar angeordnet sind, und daß die Geschwindigkeit, mit der die Austragglieder im Betrieb zu bewegen sind, einstellbar ist.

8. Maschine nach Anspruch 6 oder den Ansprüchen 6 und 7,
dadurch gekennzeichnet, daß die Fördervorrichtung (32, 51) die Form eines Kanals (51) hat, der um eine Drehachse (33) drehbar ist, und daß die kanalartige Fördervorrichtung (51) im Schnitt ein Kreissegment darstellt, wobei die Peripherie mindestens eines Austraggliedes (64) so ausgebildet ist, daß sie zumindest teilweise dem Querschnitt des Förderkanals (51) angepaßt ist und an dessen Innenseite derart anliegt, daß dieses Austragglied (64) den Förderkanal (51) in seiner Transportrichtung (110) verschließt.

9. Maschine nach Anspruch 8,
dadurch gekennzeichnet, daß die Geschwindigkeit der Fördervorrichtung (51) zu steuern ist.

10. Maschine nach Anspruch 8 oder 9,
dadurch gekennzeichnet, daß zwischen dem Vorratsbehälter (2) und dem Förderkanal (51) eine Leitvorrichtung (26) vorgesehen ist, deren Unterseite an die Oberseite des Förderkanals (51) und deren oberes Ende an eine Auslaßöffnung (25) des Vorratsbehälters (2) angrenzt.

11. Maschine nach Anspruch 10,
dadurch gekennzeichnet, daß nahe der Unterseite der Leitvorrichtung (26) ein ventilartiger Mechanismus (145) vorgesehen ist, mittels dessen die kanalartige Fördervorrichtung (51) in deren Querschnitt betrachtet wahlweise mehr oder weniger weitgehend zu schließen ist.

12. Maschine nach einem der vorhergehenden Ansprüche,
dadurch gekennzeichnet, daß die Austragglieder (60 bis 64) an einen Auslaßkanal (70) angrenzen, der zwischen den Austraggliedern (60 bis 64) und dem Streuglied (3) angeordnet ist.

13. Maschine nach einem der vorhergehenden Ansprüche,
dadurch gekennzeichnet, daß der Verteiler (56) relativ zu der Position einstellbar ist, in der das Streuglied (3) in der Maschine angeordnet ist.

14. Maschine nach einem der Ansprüche 6 bis 13,
dadurch gekennzeichnet, daß über der Fördervorrichtung mindestens ein Entfernungsmesser (103, 104) zum Messen der Dicke der auf der Fördervorrichtung (51) befindlichen Gutschicht angeordnet ist.

15. Maschine nach einem der Ansprüche 1 bis 5 sowie einem der Ansprüche 6 bis 14,
dadurch gekennzeichnet, daß die Steuervorrichtung (97) eine elektronische Steuervorrichtung aufweist, mittels der die Drehgeschwindigkeit der Fördervorrichtung (32, 51) und/oder die Bewegungsgeschwindigkeit der Austragglieder (60 bis 62, 64) und/oder der Verteiler (56) einzustellen sind.

16. Maschine nach Anspruch 15,
dadurch gekennzeichnet, daß die elektronische Vorrichtung Tasten (118) aufweist, mittels der die pro Hektar auszustreuende Menge in Kilogramm und/oder die Breite, in der das Gut ausgestreut wird, in die elektronische Vorrichtung (97) einzugeben ist.

17. Maschine nach Anspruch 15 oder 16,
dadurch gekennzeichnet, daß die Entfernungsmesser (103, 104) mit der Steuervorrichtung (97) verbunden sind, wobei die Entfernungsmesser eine Steuervorrichtung zum Steuern der Geschwindigkeit bilden, mit der sich die Fördervorrichtung (32, 51) bewegt.

18. Maschine nach einem der vorhergehenden Ansprüche,
dadurch gekennzeichnet, daß die Entfernungsmesser (103, 104) und/oder die Meßelemente (90 bis 94, 156) mit der Steuervorrichtung (97) über eine Leitung aus Lichtleiterfasern verbunden sind.

19. Maschine nach einem der vorhergehenden Ansprüche,
dadurch gekennzeichnet, daß der Vorratsbehälter (2) einen langgestreckten Boden (22) hat, der mindestens eine Auslaßöffnung (25) aufweist, und daß mindestens eine Zuführvorrichtung (27, 28) in Längsrichtung über dem Boden angeordnet ist, um das Gut von dem Vorratsbehälter zu der Auslaßöffnung (25) zu befördern, wobei die Zuführvorrichtung mit Antriebselementen verbunden ist, mittels derer die Bewegung der Zuführvorrichtung zu steuern ist.

20. Maschine nach einem der vorhergehenden Ansprüche,
dadurch gekennzeichnet, daß die Maschine Antriebselemente aufweist, mittels derer die Drehgeschwindigkeit des Streugliedes (3) zu steuern ist.

21. Maschine nach einem der vorhergehenden Ansprüche,
dadurch gekennzeichnet, daß der Antrieb des Dosierers (32) und/oder der Zuführvorrichtungen (27, 28) und/oder der Antrieb der Austragglieder (60 bis 62, 64) und/oder des einstellbaren Verteilers mittels hydraulischer Motoren (47, 66) erfolgt, die von der Steuervorrichtung (97) anzutreiben sind.

## Revendications

1. Machine pour épandre de la matière, en particulier des engrais granulaires et/ou pulvérulents tels que de l'engrais artificiel, laquelle machine comprend un châssis (1), une trémie (2) et au moins un organe épandeur (3) pouvant être entraîné, au moyen duquel la matière peut être épandue sur le sol, laquelle machine est munie d'un dispositif de distribution (56) comprenant au moins deux organes de décharge (60 à 64) à travers lesquels de la matière peut être débitée à l'organe épandeur, la capacité de débit d'un des organes de décharge étant réglable par rapport à la capacité de débit de l'autre organe de décharge,
**caractérisée** en ce qu'un certain nombre d'organes de mesure sont prévus et répartis autour d'une partie au moins de la périphérie de l'organe épandeur ou au moins un organe de mesure étant prévu de manière à être mobile autour d'une partie de la périphérie de l'organe épandeur pour effectuer une mesure dans au moins un certain nombre de points différents répartis sur ladite partie, ledit ou lesdits organes de mesure fournissant chacun une indication au sujet de la quantité de matière épandue par unité de temps contre ledit ou lesdits organes de mesure, lesdits organes de mesure, respectivement ledit organe de mesure mobile, étant couplés à un mécanisme de commande (97) traitant les données des organes de mesure, respectivement de l'organe de mesure mobile, et fournissant des données sur la répartition de la matière sur ladite partie autour de la périphérie de l'organe épandeur, la capacité de débit desdits organes de décharge étant réglable en réponse aux données traitées par le mécanisme de commande.

2. Machine selon la revendication 1, caractérisée en ce que les organes de mesure (90 à 94), respectivement l'organe de mesure mobile (156), fournissent ou fournit une indication au sujet de la direction d'épandage autour de la périphérie de l'organe épandeur.

3. Machine selon la revendication 1 ou 2, caractérisée en ce que les organes de mesure (90 à 94), respectivement l'organe de mesure mobile (156), fournissent ou fournit une indication au sujet de la quantité de matière épandue par unité de surface.

4. Machine selon la revendication 1, 2 ou 3, caractérisée en ce que l'organe de mesure mobile (156) effectue la mesure à l'intérieur de ladite partie autour de la périphérie de l'organe épandeur, continuellement ou à intervalles à l'intérieur de celle-ci.

5. Machine selon la revendication 2, caractérisée en ce que le mécanisme de commande (97) fournit au conducteur de la machine une indication au sujet des données de mesure fournies par les organes de mesure (90 à 94), respectivement par l'organe de mesure mobile.

6. Machine selon l'une quelconque des revendications précédentes, caractérisée en ce que les organes de décharge (60 à 64) coopèrent avec un organe transporteur (32, 51) au moyen duquel la matière est débitée au dispositif de distribution (56), les organes de décharge (60 à 62, 64) sont de constructions différentes entre eux et/ou sont disposés diffèremment par rapport à l'organe transporteur, et les organes de décharge peuvent débiter la matière à partir de l'organe transporteur (32) à l'organe épandeur.

7. Machine selon l'une quelconque des revendications précédentes, caractérisée en ce que les organes de décharge (60 à 64) sont prévus mobiles autour d'un axe de rotation (59) dans la machine, et en ce que la vitesse à laquelle les organes de décharge peuvent être mis en mouvement pendant le travail peut être réglée.

8. Machine selon la revendication 6 ou les revendications 6 et 7, caractérisée en ce que l'organe transporteur (32, 51) est un organe transporteur sous la forme d'une rainure (51) qui est pivotante autour d'un axe de rotation (33) et en ce que, vu en coupe, l'organe transporteur (51) en forme de rainure constitue une partie segmentaire d'un cercle, au moins un organe de décharge (64) ayant une forme périphérique qui, pour au moins une partie, est complémentaire de la section transversale de la rainure transporteuse (51) et est contigüe à la face interne de celle-ci, de telle manière que cet organe de décharge (64) obture la rainure transporteuse (51) dans sa direction de transport (110).

9. Machine selon la revendication 8, caractérisée en ce que la vitesse de l'organe transporteur (51) peut être commandée.

10. Machine selon la revendication 8 ou 9, caractérisée en ce qu'il est prévu entre la trémie (2) et la rainure de transport (51) un moyen de guidage (26) dont le côté du fond est contigu au côté supérieur de la rainure de transport (51) et dont l'extrémité supérieure est contigüe à une ouverture de décharge (25) de la trémie (2).

11. Machine selon la revendication 10, caractérisée en ce que, près du côté du fond du moyen de guidage (26) il est prévu un mécanisme (145) en forme de vanne au moyen duquel l'organe transporteur (51) en forme de rainure peut, au choix, être fermé dans une mesure plus ou moins grande, tel que vu sur une vue en coupe de l'organe transporteur en forme de rainure.

12. Machine selon l'une quelconque des revendications précédentes, caractérisée en ce que les organes de décharge (60 à 64) sont contigus à un conduit de décharge (70) qui s'étend entre les organes de décharge (60 à 64) et l'organe épandeur (3).

13. Machine selon l'une quelconque des revendications précédentes, caractérisée en ce que le dispositif de distribution (56) est réglable par rapport à la position dans laquelle l'organe épandeur (3) est situé dans la machine.

14. Machine selon l'une quelconque des revendications 6 à 13, caractérisée en ce qu'au moins un organe mesureur de distance (103, 104) pour mesurer l'épaisseur de la couche de matière sur l'organe transporteur (51) est disposé au dessus de l'organe transporteur.

15. Machine selon l'une quelconque des revendications 1 à 5 et selon l'une quelconque des revendications 6 à 14, caractérisée en ce que le mécanisme de commande (97) comporte un mécanisme électronique de commande au moyen duquel la vitesse de rotation de l'organe transporteur (32, 51) et/ou la vitesse de circulation des organes de décharge (60 à 62, 64) et/ou du dispositif de distribution (56) peuvent être réglées.

16. Machine selon la revendication 15, caractérisée en ce que le mécanisme électronique a des touches (118) au moyen desquelles la quantité de kilogrammes à épandre par hectare et/ou la largeur sur laquelle la matière est épandue peuvent être introduites dans le mécanisme électronique (97).

17. Machine selon la revendication 15 ou 16, caractérisée en ce que les organes mesureurs de distance (103,104) sont couplés au mécanisme de commande (97), les organes mesureurs de distance constituant un mécanisme de commande pour commander la vitesse à laquelle se meut l'organe transporteur (32, 51).

18. Machine selon l'une quelconque des revendications précédentes, caractérisée en ce que les organes mesureurs de distance (103, 104) et/ou les organes de mesure (90 à 94, 156) sont couplés au mécanisme de commande (97) par un câble en fibre optique.

19. Machine selon l'une quelconque des revendications précédentes, caractérisée en ce que la trémie (2) a un fond allongé qui est muni d'au moins un orifice de décharge (25), et au moins un organe d'alimentation (27, 28) est prévu dans un sens longitudinal au dessus du fond pour débiter la matière à partir de la trémie à l'orifice de décharge (25), ledit organe d'alimentation étant couplé à des organes d'entraînement au moyen desquels le mouvement de l'organe d'alimentation peut être commandé.

20. Machine selon l'une quelconque des revendications précédentes, caractérisée en ce que la machine a des organes d'entraînement au moyen desquels la vitesse de rotation de l'organe épandeur (3) peut être commandée.

21. Machine selon l'une quelconque des revendications précédentes, caractérisée en ce que l'entraînement de l'organe doseur (32) et/ou des organes d'alimentation (27, 28) et/ou l'entraînement des organes de décharge (60 à 62, 64) et/ou du dispositif réglable de distribution est effectué par des moteurs hydrauliques (47, 66) qui peuvent être commandés par le mécanisme de commande (97).
